# EUROPÄISCHE PATENTSCHRIFT

(11) **EP 1 518 623 B1**
(45) Veröffentlichungstag und Bekanntmachung des Hinweises auf die Patenterteilung: **30.11.2011**
(21) Anmeldenummer: 04017920.2
(22) Anmeldetag: 29.07.2004
(51) Int. Cl.: B23B 29/04

(54) **Vorrichtung zum Verbinden eines Werkzeugteils mit einem Aufnahmeteil**
Device to connect a toolpart with a spindel
Dispositif de connection d'une pièce porte-outil avec une broche

(30) Priorität: 24.09.2003 DE 10344496; 04.03.2004 DE 102004011204
(43) Veröffentlichungstag der Anmeldung: 30.03.2005
(73) Patentinhaber: Komet Group GmbH, 74354 Besigheim (DE)
(72) Erfinder: Reinauer, Josef, 72488 Sigmaringen (DE)
(74) Vertreter: WOLF & LUTZ

(56) Entgegenhaltungen:
- EP-A- 1 226 894
- US-B1- 6 739 791

## Beschreibung

Die Erfindung betrifft eine Vorrichtung zum Verbinden eines einen Hohlschaft aufweisenden Werkzeugteils mit einem eine Aufnahme für den Hohlschaft aufweisenden, vorzugsweise stirnseitig an einer Maschinenspindel angeordneten Aufnahmeteil, mit zwei einander radial gegenüberliegenden, mit ihrem einen Ende in die Aufnahme einsetzbaren und sich mit ihrem anderen Ende in das Innere des einzuspannenden Hohlschafts erstreckenden Spannelementen, die mit Spannschultern an im Inneren der Aufnahme und des Hohlschafts angeordneten Spannflächen abstützbar sind, und mit einem Betätigungsmechanismus zur Verstellung der Spannelemente zwischen einer Lösestellung und einer Spannstellung.

Eine solche Verbindungsvorrichtung ist beispielsweise bekannt aus der EP-A-1 226 894. Die mit dem Betätigungsmechanismus verstellbaren Spannelemente dienen zur Erzeugung einer Anpresskraft zwischen Planflächen der miteinander zu kuppelnden Teile. Bei der bekannten Vorrichtung sind die klauen- oder klammerartigen Spannelemente mit ihrem einen Ende in die Aufnahme des Aufnahmeteils eingesetzt, während sie sich mit ihrem anderen Ende in das Innere des werkzeugteilseitigen Hohlschafts erstrecken. Sie sind mit je zwei in axialem Abstand voneinander angeordneten, einander zugewandten Spannschultern an im Inneren der Aufnahme und des Hohlschafts angeordneten, voneinander abgewandten Spannflächen abstützbar und mit dem Betätigungsmechanismus zwischen einer Lösestellung und einer Spannstellung verstellbar. Der Betätigungsmechanismus weist bei der bekannten Vorrichtung zwei in je eine stirnseitig sowie radial nach innen offene Ausnehmung der einander radial gegenüberliegenden Spannelemente einsetzbare Druckstücke sowie ein Schraubelement zur Verstellung des Abstands zwischen den Druckstücken auf. Das Schraubelement ist dabei als Differentialschraube ausgebildet, die mit ihren Gewindepartien in miteinander fluchtende, radial ausgerichtete gegenläufige Innengewinde der Druckstücke eingreift. Um die nötige Schwenkbewegung mitmachen zu können, weisen die Druckstücke eine zum benachbarten Spannelement hin teilzylindrische, auf dessen Anlagefläche beim Spannvorgang abrollende Druckfläche auf. Das Schraubelement greift durch das Zentrum des Spannelementpaars hindurch, so dass ein achszentraler Durchgang versperrt wird. Dementsprechend sind dort exzentrisch angeordnete achsparallele Kühlmittelrohre vorgesehen, die mit zentralen Zulauf- und Auslauföffnungen im Aufnahmeteil und im Werkzeugteil kommunizieren. Die Kühlmittelrohre haben zugleich die Aufgabe von Verbindungsstegen, die mit stimseitigen Zentrierelementen zu einem die Spannelemente umfassenden Käfig miteinander verbunden sind. Die exzentrisch angeordneten Kühlmittelrohre sind wegen der Strömungsumlenkung an den Enden nicht für eine Minimalmengenschmierung geeignet.

Ausgehend hiervon liegt der Erfindung die Aufgabe zugrunde, eine Verbindungsvorrichtung der eingangs angegebenen Art zu entwickeln, die besonders einfach herstellbar und montierbar ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung wird primär darin gesehen, dass der Betätigungsmechanismus zwei an den Spannelementen angeordnete, in den Zwischenraum zwischen den Spannelementen weisende Stützorgane und ein in Spannrichtung zwischen den Stützorganen angeordnetes und mit seinen beiden Enden gegen diese an jeweils einer Kontaktstelle anliegendes Zwischenglied aufweist, wobei mindestes eines der Stützorgane beim Verstellvorgang relativ zum zugehörigen Spannelement unter Beibehaltung des Kontakts mit dem Zwischenglied verstellbar und gegenüber dem Zwischenglied um eine zur Verschiebeachse parallele Achse verdrehbar ist. Zweckmäßig sind dabei die Stützorgane beim Verstellvorgang an den Kontaktstellen gegenüber dem Zwischenglied quer zur Verschiebeachse begrenzt verschwenkbar. Dies ist besonders dann von Vorteil, wenn die Spannelemente beim Verstellvorgang eine Kippbewegung ausführen.

Gemäß einer bevorzugten Ausgestaltung der Erfindung ist mindestens eines der Stützorgane als in ein Innengewinde des zugehörigen Spannelementes eingreifendes Schraubelement ausgebildet. Da die Kontaktstellen einem Verschleiß unterliegen, sind zweckmäßig beide Stützorgane als Schraubelement ausgebildet, wobei vorzugsweise eines der Schraubelemente beim Verstellvorgang unbetätigt bleibt. In Notfällen, beispielsweise wenn die Betätigungsschraube oder deren Eingriff beschädigt ist, kann auch über das sonst unbetätigt bleibende Schraubelement ein Verstellvorgang ausgelöst werden.

Eine weitere vorteilhafte Ausgestaltung der Erfindung sieht vor, dass das Zwischenglied an seinen den Stützelementen zugewandten Kontaktflächen die Gestalt einer Kugelkalotte aufweist und dass die dem Zwischenglied zugewandten Kontaktflächen der Stützelemente als Kugelpfannen ausgebildet sind. Damit wird erreicht, dass das Zwischenglied trotz der sich beim Betätigungsvorgang gegenüber der Spannachse verschwenkenden Stützorgane stets in Spannrichtung ausgerichtet wird. Dadurch kann das Zwischenglied mit einem querverlaufenden Durchbruch versehen werden, durch den ein zentrales Kühlmittelrohr hindurchgeführt werden kann. Da das Zwischenglied beim Spannvorgang eine quer zur Werkzeugachse verlaufende Bewegung ausführt, weist der Durchbruch zweckmäßig einen in Spannrichtung des Zwischenglieds langgestreckten, langlochartigen Umriss auf.

Um über die Vorrichtung möglichst hohe Einspannkräfte erzielen zu können, wird gemäß einer bevorzugten Ausgestaltung der Erfindung vorgeschlagen, dass die Stützorgane und das Zwischenglied in der Spannstellung der Spannelemente koaxial in Spannrichtung miteinander fluchten. Dementsprechend schließen die Stützelemente und das Zwischenglied in der Lösestellung des Spannelementes einen in Richtung Werkzeugteil offenen stumpfen Winkel miteinander ein. Im Übrigen ist das Zwischenglied beim Spannvorgang zwischen der Lösestellung und der Spannstellung stets achsparallel zur Spannrichtung ausgerichtet.

Wenn die Spannelemente und ihr Betätigungsmechanismus so konzipiert sind, dass sie nur in Spannrichtung wirken, sind sie zweckmäßig mit ihren Stützorganen federgestützt in Richtung Zwischenglied vorgespannt, so dass über den Betätigungsmechanismus auch der Lösevorgang eingeleitet werden kann. Vorteilhafterweise ist dann eine die Spannelemente über- oder umgreifende Vorspannfeder vorgesehen, die als geschlossene, vorgespannte Wurmfeder ausgebildet sein kann. Die Wurmfeder greift zweckmäßig in sich zu einer unterbrochenen Ringnut ergänzende Einstiche der Spannelemente ein.

Eine besonders vorteilhafte Ausgestaltung der Erfindung sieht vor, dass die Stützorgane und das Zwischenglied einander paarweise zugeordnete, in Druckrichtung bzw. in Zugrichtung wirkende Kraftübertragungsflächen aufweisen. In diesem Fall ist eine Vorspannfeder entbehrlich. Damit die Stützorgane reibungsfrei gegenüber dem Zwischenglied verdreht werden können und zusätzlich eine Kippbewegung möglich ist, wird gemäß einer bevorzugten Ausgestaltung der Erfindung vorgeschlagen, dass zwischen den in Druckrichtung und den in Zugrichtung wirkenden Kraftübertragungsflächen ein axiales Verschiebespiel ausgebildet ist. Bei einer besonders vorteilhaften konstruktiven Ausgestaltung dieser Ausführungsvariante weist das Zwischenglied eine Mittelpartie und zwei an den Enden der Mittelpartie axial nach entgegengesetzten Seiten überstehende Kupplungszapfen auf. Das Zwischenglied greift dabei zweckmäßig mit seinen Kupplungszapfen unter Bildung der einander zugewandten Kraftübertragungsflächen in je eine Kupplungsaufnahme der benachbarten Stützorgane ein, wobei die Kupplungszapfen eine als Ringnut ausgebildete Hinterschneidung aufweisen, in die ein die benachbarte Kupplungsaufnahme begrenzender Sprengring eingreift. Zur Erleichterung der Kippbewegung ist die dem Sprengring zugewandte ringnutseitige ringförmige Kupplungszapfenflanke partiell kugelförmig gekrümmt. Der Mittelpunkt der kugelförmigen Krümmung ist dabei vorzugsweise achszentral in der Nähe der Kupplungszapfen-Stirnfläche angeordnet. Zusätzlich ist zweckmäßig die dem Kupplungsaufnahmeboden zugewandte Kupplungszapfen-Stirnfläche in ihrem ringförmigen Randbereich partiell kugelförmig konvex gekrümmt, während der Kupplungsaufnahmeboden hierzu komplementär partiell kugelförmig konkav gekrümmt sein kann. Der Mittelpunkt der kugelförmigen Krümmung ist in diesem Fall bevorzugt achszentral im Zentrum der Mittelpartie des Zwischenglieds angeordnet.

Gemäß einer weiteren bevorzugten Ausgestaltung der Erfindung sind die Spannelemente mit je zwei in axialem Abstand voneinander angeordneten Spannschultern an im Inneren der Aufnahme des Hohlschafts angeordneten, voneinander abgewandten Spannflächen abstützbar. Außerdem liegen sie an ihren aufnahmeseitigen Enden oder im Abstand von diesen zweckmäßig unmittelbar oder mittelbar über ein Lagerelement gegeneinander an und sind über den Betätigungsmechanismus um eine durch die Anlagestelle gebildete Kippachse gegeneinander verschwenkbar.

Eine weitere bevorzugte Ausgestaltung der Erfindung sieht vor, dass die beiden Spannelemente an ihren aufnahmeseitigen Enden je eine sich zu einem gemeinsamen Zentrierzapfen ergänzende Zapfenpartie aufweisen, mit denen sie in eine Zylinderausnehmung des Aufnahmeteils eingreifen. Zweckmäßig sind die Lagerelemente als Lagerrollen ausgebildet, die unter Freilassung eines zentralen Durchgriffs im Abstand voneinander im Bereich des Zentrierzapfens angeordnet sind. Ein gleichbleibendes Spiel des Zentrierzapfens in der Zylinderausnehmung wird auch während des Verstellvorgangs dadurch erzielt, dass die Zapfenpartien an ihren Außenflächen einen teilkugelförmigen balligen Ring tragen, dessen Mittelpunkt achszentral auf der Kippachse liegt.

Gemäß einer weiteren vorteilhaften Ausgestaltung der Erfindung ist die eine Spannschulter der Spannelemente an je einer in eine Bajonettausnehmung des Aufnahmeteils bajonettartig einführbaren und dort arretierbaren Schließzunge angeordnet. Die Schließzunge liegt zweckmäßig mit ihrer teilkugelförmig gekrümmten Spannschulter federgestützt gegen die die Bajonettausnehmung begrenzende aufnahmeseitige Gegenschulter an. Vorteilhafterweise ist die Spannfläche der Spannschulter so gekrümmt, dass die Spannelemente im Lösezustand unter der Einwirkung einer Feder näher in Richtung Werkzeugteil angeordnet sind als im Spannzustand. Mit diesen Maßnahmen wird die Fangsicherheit beim Kupplungsvorgang verbessert.

Eine weitere Verbesserung in dieser Hinsicht wird gemäß einer vorteilhaften oder alternativen Ausgestaltung der Erfindung dadurch erzielt, dass zwei gleichartige Bügelfedern vorgesehen sind, die je einen Bügelsteg und zwei endseitige Federschlaufen aufweisen. Die Bügelfedern greifen mit ihrem Bügelsteg in je einen Einstich der Spannelemente ein und stehen mit ihren Federschlaufen an zwei einander gegenüberliegenden, vorzugsweise ebenen Oberflächenpartien der Spannelemente in einen Freiraum über. Die Federschlaufen laufen beim bajonettartigen Eindrehen der Spannelemente in die Aufnahme auf Randkanten einer Bajonettausnehmung auf und verrasten mit diesen in der jeweiligen Endstellung unter Ausübung einer die Spannelemente in Richtung Werkzeugteil verschiebenden Federkraft in der vorgegebenen Drehlage. Die Einstiche bilden dabei zweckmäßig zugleich die unterbrochene Umfangsnut zur Aufnahme der Wurmfeder, so dass der Wurmfeder nicht nur eine Funktion beim Zusammenhalten der beiden Spannelemente, sondern auch beim Sichern der Bügelfedern in den Einstichen zukommt.

Eine weitere bevorzugte Ausgestaltung der Erfindung sieht vor, dass im Zwischenraum zwischen den Spannelementen ein axial durch-gehender Freiraum gebildet ist, der vorteilhafterweise von einem sich zwischen dem Aufnahmeteil und dem Werkzeugteil erstreckenden achszentralen Rohrstück durchdrungen ist, welches achszentrale Funktionskanäle, insbesondere Kühlmittelkanäle des Aufnahmeteils und des Werkzeugteils miteinander verbindet. Auf diese Weise kann ein zentraler, im Strömungsquerschnitt über die gesamte Länge gleichbleibender, geradliniger Kanal gebildet werden, der wegen der geringen Strömungsverluste für die Minimalschmierung geeignet ist. Vorteilhafterweise greift das achszentrale Rohrstück durch den im Zwischenglied befindlichen Durchbruch und durch den Freiraum zwischen den beiden Lagerrollen hindurch.

Um das Rohrstück in den Kupplungsbereich zwischen Aufnahmeteil und Werkstückteil einfach einpassen zu können, trägt es an seinem einen Ende eine Flanschbüchse, mit der es in eine im Aufnahmeteil befindliche Bohrung dichtend bis zum Anschlag des Flanschs eingreift. An seinem werkzeugseitigen Ende trägt es eine Dichtscheibe, mit der es unter Vorspannung gegen eine Dichtfläche des Werkzeugteils anliegt. Die Dichtscheibe und/oder die Flanschbüchse sind dabei auf ein Gewinde des Rohrstücks verstellbar aufgeschraubt, so dass eine Längenanpassung möglich ist.

Eine weitere bevorzugte Ausgestaltung der Erfindung sieht vor, dass die Dichtscheibe unter der Einwirkung einer Ausstoßfeder in Richtung Werkzeugteil vorgespannt ist. Die vorzugsweise als Tellerfederpaket ausgebildete Ausstoßfeder ist dabei zweckmäßig in einem am Rohrstück angeordneten Käfig so angeordnet, dass sie beim Einspannvorgang eine Vorspannung in Ausstoßrichtung des Werkzeugteils aufbaut, die beim Ausspannvorgang wirksam wird.

Eine besonders vorteilhafte Alternative hierzu, die ohne Ausstoßfeder auskommt, weist einen Auswerfer auf, der eine das werkzeugseitige Ende der Spannelemente übergreifende Dichtscheibe und zwei an einander gegenüberliegenden Randpartien der Dichtscheibe angeformte, die Spannelemente an ihren Seitenkanten paarweise überlappende Stützlaschen aufweist, die an Schultern der Spannelemente einrastbar sind und die mindestens einen durch die Dichtscheibe mit einer Konusspitze hindurchgreifenden Stift aufweisen, gegen dessen Konusflächen die Spannelemente beim Ausspannen unter der Einwirkung von an diesen angreifenden Zugkräften unter Auswurf des Werkzeugteils aus der Aufnahme auflaufen. Der Auswerfer ist dabei zweckmäßig mit den Endkanten seiner Stützlaschen im spindelseitigen Aufnahmeteil abstützbar. Sie bilden damit ein Widerlager für das außenseitig gegen die Dichtscheibe andrückende Werkzeugteil und sorgen für eine wirksame Abdichtung. Eine zusätzliche Funktion der Stützlaschen besteht darin, dass sie in eine Bajonett-Einführöffnung des Aufnahmeteils eingreifen und dabei die Spannelemente in ihrer Montageposition sichern.

Vorteilhafterweise sind die die Dichtscheibe durchgreifenden Stifte als Gewindestifte ausgebildet. Neben der Auswerferfunktion kommt ihnen damit eine zweite Funktion als Demontagehilfe für den an den Spannelementen eingerasteten Auswerfer zu. Zu diesem Zweck werden die Stifte so weit gegen die im Lösezustand gegeneinander anliegenden Spannelemente gedreht, bis die Stützlaschen aus ihrer Rastposition an den Spannelementen ausgerastet sind.

Grundsätzlich ist es möglich, das Werkzeugteil auch ohne Ausstoßvorrichtung aus der Aufnahme zu lösen. Dazu kann ein Hilfswerkzeug vorgesehen werden, das durch eine zu den Spannorganen führende Durchtrittsöffnung beim benachbarten Spannelement hindurchgreift. Durch Verkanten des Hilfswerkzeugs kann der konische Hohlschaft aus der konischen Aufnahme gelöst werden. Das Hilfswerkzeug ist dabei zweckmäßig mit balligen Ringteilen innerhalb der aufnahmeteilseitigen Durchtrittsbohrung und in der Eingriffsbohrung im Werkzeugteil abstützbar. Vorteilhafterweise ist das Hilfswerkzeug am Griff eines Schraubendrehers für die Betätigung der Schraubelemente innerhalb des Betätigungsmechanismus unverlierbar angeordnet.

Das erfindungsgemäße Hilfswerkzeug weist einen Bolzen mit zwei in axialem Abstand voneinander angeordneten balligen Ringpartien zum Abstützen und Aushebeln innerhalb miteinander fluchtender Eingriffsöffnungen des Aufnahmeteils und des Werkzeugteils auf.

Wenn beim vorbekannten Stand der Technik die Spannelemente noch einzeln als Gussteile hergestellt werden mussten, so besteht bei der beschriebenen Ausbildung der erfindungsgemäßen Spannelemente die Möglichkeit einer besonders einfachen Herstellung in folgender Weise:
- Zunächst wird ein Drehteil unter Bildung eines Rohlings hergestellt, in das die Außenkonturen der Spannflächen und der Einstiche beider Spannelemente eingeformt werden und an dessen Ende ein Zentrierzapfen mit balliger Ringpartie angeformt wird;
- durch die Ringpartie des Zentrierzapfens wird eine dessen Mittelpunkt durchgreifende Querbohrung eingebracht;
- sodann wird der Rohling achsparallel unter Bildung zweier Spannelementrohlinge so geteilt, dass die Querbohrung mittig und parallel zu deren Achse aufgetrennt wird und zwischen den Rohlingen ein freier Zwischenraum entsteht.

Vorteilhafterweise wird an dem Rohling vor dem Teilvorgang an zwei einander gegenüberliegenden Seiten Material unter Bildung zueinander paralleler, zur Querbohrungsachse senkrecht ausgerichteter ebener Oberflächenpartien abgetragen, vorzugsweise abgefräst.

Vorteilhafterweise werden die Spannelementrohlinge an ihren einander zugewandten Seiten mit einer zur Werkzeugteilseite divergierenden Schrägfläche versehen, die es ermöglicht, die Spannelemente beim Lösevorgang um die Kippachse gegeneinander zu kippen.

Eine weitere bevorzugte Ausgestaltung der Erfindung sieht vor, dass die Spannelementrohlinge an ihren einander zugewandten Seiten mit mittig angeordneten Längsnuten versehen werden, die sich zu einer achszentralen Durchgangsöffnung für den Durchgriff eines zentralen Rohrstücks ergänzen. Weiter werden in die geteilte Querbohrung zwei im Abstand voneinander unter Freilassung der Durchgangsöffnung für das Rohrstück angeordnete rollenförmige Lagerelemente eingelegt. Schließlich wird in die Spannelementrohlinge eine die Schrägflächen durchdringende, querverlaufende Gewindebohrung zur Aufnahme eines als Schraubelement ausgebildeten Stützorgans eingebracht.

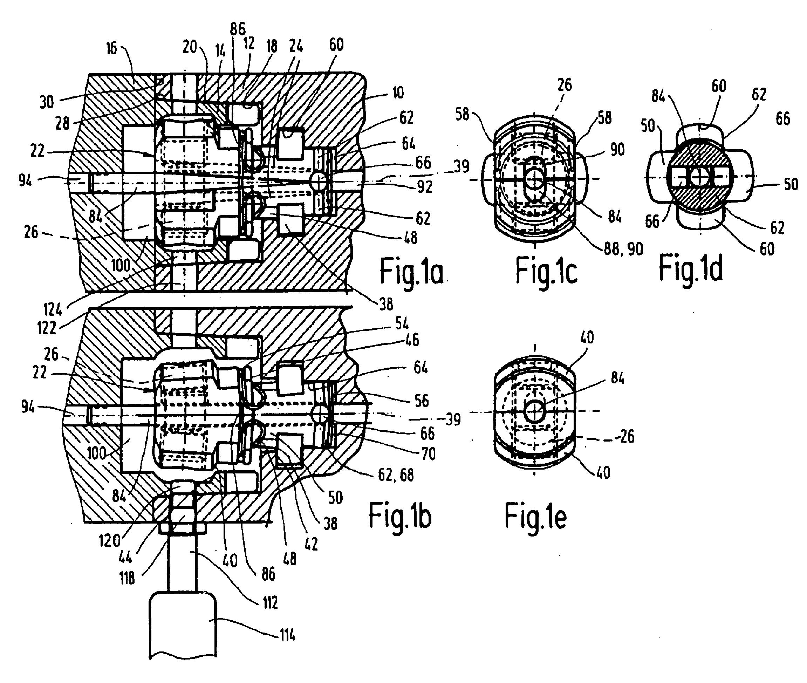

Im Folgenden wird die Erfindung anhand der in der Zeichnung in schematischer Weise dargestellten Ausführungsbeispiele näher erläutert. Es zeigen
- Fig. 1a und 1b: einen Längsschnitt durch eine Schnittstelle zwischen einem Aufnahmeteil und einem Werkzeugteil mit integrierter Spannvorrichtung in Spannstellung und in Lösestellung des Spanneinsatzes;
- Fig. 1 c und 1 e: je eine Draufsicht auf den Spanneinsatz in eingebautem Zustand in Spannstellung und in Lösestellung;
- Fig. 1d: einen Schnitt durch den Spanneinsatz im Bereich des Kipplagers im Zentrierzapfen;
- Fig. 2a bis 2e: Darstellungen entsprechend Fig. 1a bis 1e für ein abgewandeltes Ausführungsbeispiel mit auf das zentrale Rohrstück aufgeschraubter Dichtscheibe;
- Fig. 3a bis 3e: Darstellungen entsprechend Fig. 1a bis 1e für ein abgewandeltes Ausführungsbeispiel mit auf das zentrale Rohrstück aufgeschraubtem Auswerfer;
- Fig. 4a bis 4c: eine Seitenansicht, eine Draufsicht und eine Schnittdarstellung eines aus zwei Spannelementen bestehenden Spanneinsatzes ohne Federn und Rohrstück;
- Fig. 5a und 5b: Seitenansichten (teilweise geschnitten) eines dreiteiligen Betätigungsmechanismus;
- Fig. 5c und 5d: eine Schnittdarstellung und eine Seitenansicht des Zwischenstücks des Betätigungsmechanismus nach Fig. 5a und 5b;
- Fig. 5e: eine Schnittdarstellung eines der Schraubelemente des Betätigungsmechanismus nach Fig. 5a und 5b.
- Fig. 6a und 6b: eine Seitenansicht und eine Stirnseitenansicht der als Bügelfeder ausgebildeten Rast- und Vorschubfeder der Vorrichtung nach Fig. 1a bis 1e.
- Fig. 7: eine Seitenansicht des Rohrstücks mit Auswerfer und Flanschbüchse teilweise im Schnitt;
- Fig. 8a und b: Darstellungen entsprechend Fig. 1a und b für ein bevorzugtes Ausführungsbeispiel einer Schnittstelle mit Spanneinsatz;
- Fig. 8c und d: je eine Draufsicht auf den Spanneinsatz in Spannstellung und in Lösestellung;
- Fig. 9a und b: je eine Seitenansicht teilweise im Schnitt des Spanneinsatzes in Spannstellung und in Lösestellung mit betätigtem Auswerfer;
- Fig. 10a bis c: eine Seitenansicht des Spanneinsatzes nach Fig. 9a und b mit geschnittenem Auswerfer;
- Fig. 10b und c: eine Draufsicht und eine Untenansicht des Spanneinsatzes nach Fig. 10a;
- Fig. 11a bis c: drei Seitenansichten des Betätigungsmechanismus teilweise im Schnitt bei Druckbetätigung, bei Zugbetätigung und im gekippten Zustand;
- Fig. 12a und b eine: Schnittdarstellung und eine Draufsicht des Auswerfers.

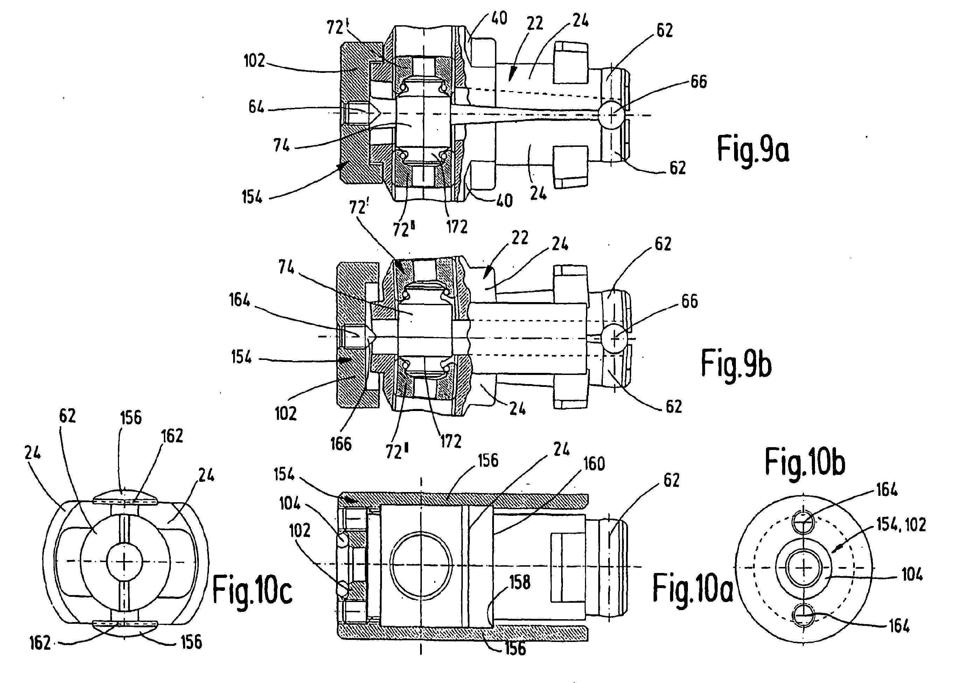

Die in der Zeichnung dargestellten Schnittstellen bestehen aus einem am stirnseitigen Ende einer Maschinenspindel 10 angeordneten Aufnahmeteil 12, einem einen Hohlschaft 14 aufweisenden Werkzeugteil 16, einer im Aufnahmeteil 12 angeordneten Aufnahme 18 für den an seiner Außenfläche 20 kegelförmigen Hohlschaft 14 sowie einem Spannmechanismus 22. Der Spannmechanismus 22 weist zwei einander gegenüberliegende Spannelemente 24 und einen Betätigungsmechanismus 26 zur begrenzten Verstellung der Spannelemente zwischen Spannstellung (Fig. 1a, 2a, 3a, 8a, 9a) und einer Lösestellung (Fig. 1b, 2b, 3b, 8b, 9b) auf. Das Aufnahmeteil 12 und der Hohlschaft 14 können Bestandteil einer Maschinenspindel bzw. eines Werkzeugkopfes oder eines Adapters oder Verlängerungsstücks sein.

Der Spannmechanismus 22 hat primär die Aufgabe, im Spannzustand die Anpresskraft zwischen den einander zugewandten ringförmigen Planflächen 28, 30 des Werkzeugteils 16 und des Aufnahmeteils 12 zu erzeugen.

Die Spannelemente 24 sind mit je zwei in axialem Abstand voneinander angeordneten, einander zugewandten Spannschultern 38, 40 an im Inneren des Aufnahmeteils 12 und des Hohlschafts 14 angeordneten, voneinander abgewandten Spannflächen 42, 44 abstützbar. Die aufnahmeseitigen Spannflächen 42 und die zugehörigen Spannschultern 38 der Spannelemente 24 sind im wesentlichen in einer Radialebene ausgerichtet, während die hohlschaftseitigen Spannflächen 44 und die zugehörigen Spannschultern 40 der Spannelemente 24 als gegenüber den aufnahmeseitigen Spannflächen und-schultern 42, 38 radial nach außen divergierende Konusflächen ausgebildet sind. Die Spannschultern 40 der Spannelemente 24 schließen einen auf die Spannschaftachse bezogenen Zentralwinkel von 50° bis 90° ein. Dadurch wird eine weitgehend gleichmäßige Krafteinleitung über den Umfang des Hohlschafts erzielt.

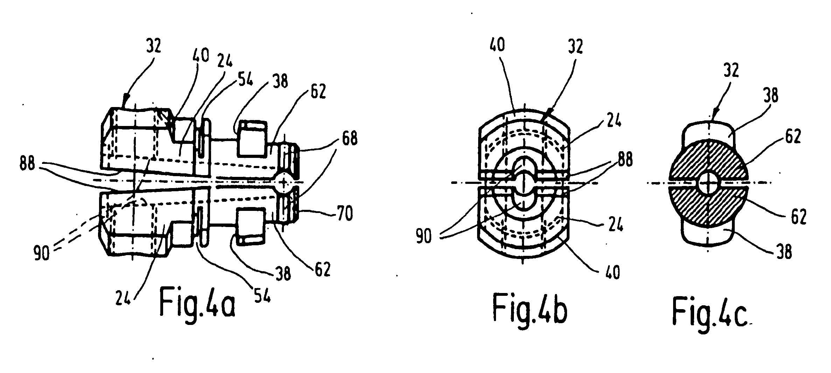

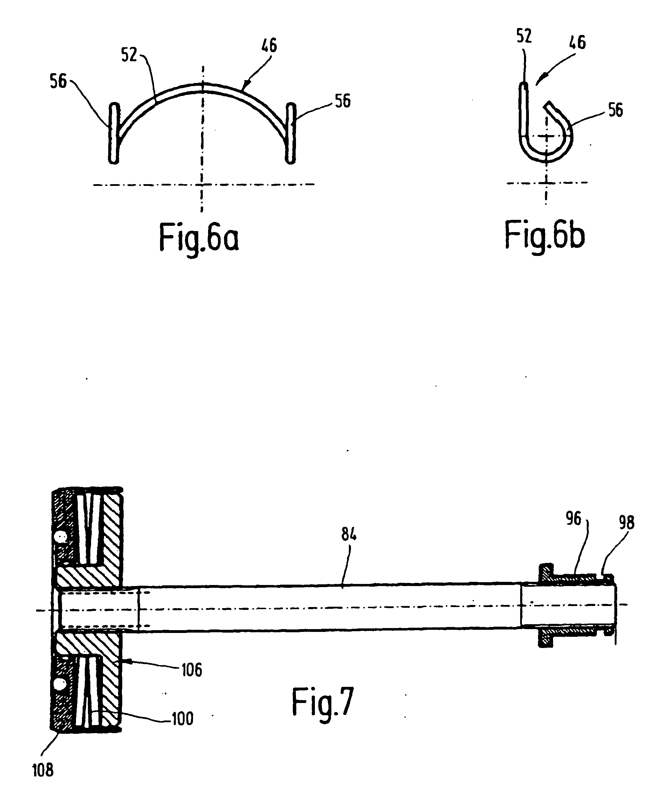

Der aus den Spannelementen 24 zusammengesetzte Spanneinsatz 32 mit seinen aufnahmeteilseitigen Spannschultern 38 ist bajonettartig mit den Spannflächen 42 des Aufnahmeteils 12 verriegelbar und bei den Ausführungsbeispielen nach Fig. 1 bis 6 in der Verriegelungsstellung mittels zweiter Bügelfedern 46 an den Kanten 48 der aufnahmeteilseitigen Einführöffnung 50 form- und kraftschlüssig gegen Verdrehen gesichert. Die Bügelfedern 46 greifen mit einem Bügelsteg 52 in jeweils einen außenseitigen, in Umfangsrichtung ausgerichteten Einstich der Spannelemente 24 ein, so dass sie axial unverschiebbar sind. Sie weisen jeweils an ihren Enden parallel gerichtete Federschlaufen 56 auf, die gegen seitliche ebene Oberflächenpartien 58 der Spannelemente 24 anliegen und die mit ihrer Rundung auf den Kanten 48 der Einführöffnung 50 auflaufen und an diesen einrasten. Aufgrund der Federwirkung an den Federschlaufen 56 werden die Spannelemente 24 des Spanneinsatzes 32 in Richtung Werkzeugteil 16 gedrückt. Dadurch wird die Fangsicherheit zwischen den hohlschaftseitigen Schulterflächen 40, 44 erhöht.

Die aufnahmeteilseitigen Spannschultern 38 der Spannelemente 24 bilden eine Kugelpartie, deren Mittelpunkt außerhalb der Werkzeugachse 39 angeordnet ist und die deshalb dafür sorgen, dass die Spannelemente 24 im Lösezustand weiter in Richtung Werkzeugteil 16 verschoben sind als im Spannzustand. Dies gilt vor allem dann, wenn die die Bajonettausnehmung 60 begrenzende Spannfläche 42 als ebene Ringfläche ausgebildet ist.

An ihren aufnahmeteilseitigen Enden weisen die Spannelemente 24 jeweils eine Zapfenpartie 62 auf, die in eine zentrale zylindrische Zentrierausnehmung 64 des Aufnahmeteils 12 eingreifen und die über ein durch zwei Lagerrollen 66 gebildetes Kipplager gegeneinander abgestützt sind. Auf der Außenseite des Kipplagers weisen die Zapfenpartien 62 kugelförmig ballige Ringpartien 68 auf, die dafür sorgen, dass die Zapfenpartien 62 beim Kippvorgang ohne die Gefahr des Verklemmens an der Wandung der Zylinderausnehmung 64 abrollen können.

Der Betätigungsmechanismus 26 besteht im Wesentlichen aus zwei an den Spannelementen 24 angeordneten Stützorganen 72', 72" und einem im Zwischenraum zwischen den Spannelementen 24 zwischen den Stützorganen 72', 72" angeordneten Zwischenglied 74. Die beiden Stützorgane 72', 72" sind als Schraubelemente ausgebildet, die durch Gewindebohrungen 76 in den Spannelementen 24 hindurchgreifen.

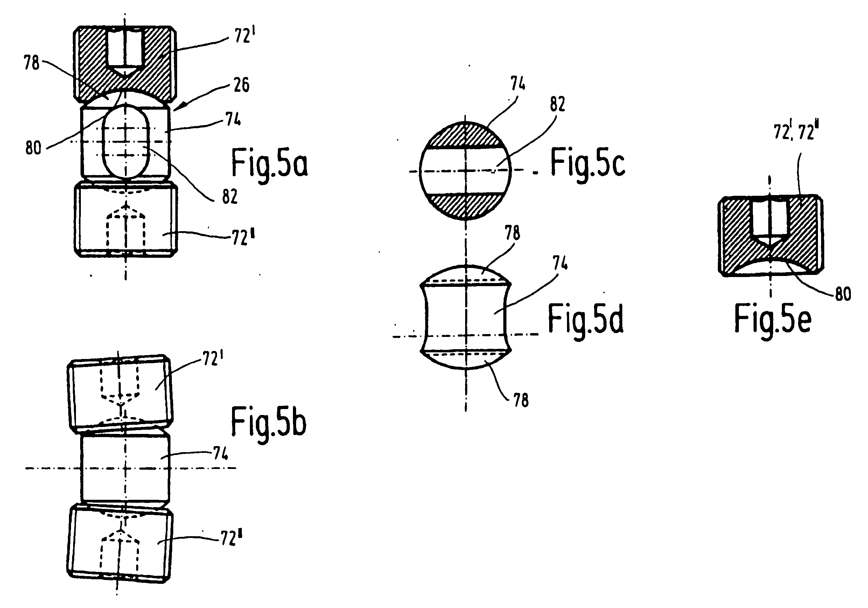

Bei den Ausführungsbeispielen nach Fig. 1 bis 6 weist das Zwischenglied 74 an seinen Enden Kugelkalotten 78 auf, mit denen es in stirnseitige Kugelpfannen 80 an den Stützorganen 72', 72" eingreift. Die Kugelkalotten 78 und die Kugelpfannen 80 bilden an den Kontaktstellen zwischen Stützorganen und Zwischenglied jeweils ein Kugelgelenk, das ein gegenseitiges Verschwenken der Stützorgane und des Zwischenglieds beim Spannvorgang erlaubt (vgl. Fig. 5a und 5b). Das Zwischenglied 74 weist außerdem einen im Umriss langlochförmigen Durchbruch 82 auf, der für den Durchgriff eines zentralen Rohrstücks 84 bestimmt ist.

Der Betätigungsmechanismus weist bei den Ausführungsbeispielen nach Fig. 1 bis 6 zudem eine Rückstellfeder 86 auf, die als in die Einstiche 54 der Spannelemente 24 eingreifende und dort axial gesicherte, ringförmige geschlossene Wurmfeder ausgebildet ist (vgl. Fig. 1 a und b). Die Rückstellfeder 86 sorgt dafür, dass die Stützorgane 72', 72" stets gegen das Zwischenglied 74 anliegen, so dass die Spannelemente 24 über den Betätigungsmechanismus 26 sowohl in Spannrichtung als auch in Löserichtung betätigt werden können. Die Rückstellfeder 86 sorgt außerdem dafür, dass die beiden Bügelfedern 46 in ihren Einstichen 54 zuverlässig festgehalten sind.

Die Spannelemente 32 weisen an ihren einander zugewandten Seiten Schrägflächen 88 auf, die im Spannzustand gemäß den Figuren 1a, 2a, 3a zum Werkzeugteil hin divergieren und im Lösezustand gemäß den Figuren 1b, 2b, 3b gegeneinander anliegen. Im Spannzustand sind die Stützorgane 72', 72" und das Zwischenglied 74 in Spannrichtung gegeneinander ausgefluchtet, während sie im Lösezustand eine in Richtung Werkzeugteil offenen stumpfen Winkel miteinander einschließen. Beim Spannvorgang wird nur eines der Stützorgane 72' über einen Schraubendreher betätigt, während das andere Stützorgan 72" im zugehörigen Spannelement 24 festgehalten wird. Deshalb weist das mitbewegte Zwischenglied 74 einen langlochförmigen Durchbruch 82 für das achszentrale Rohrstück 84 auf.

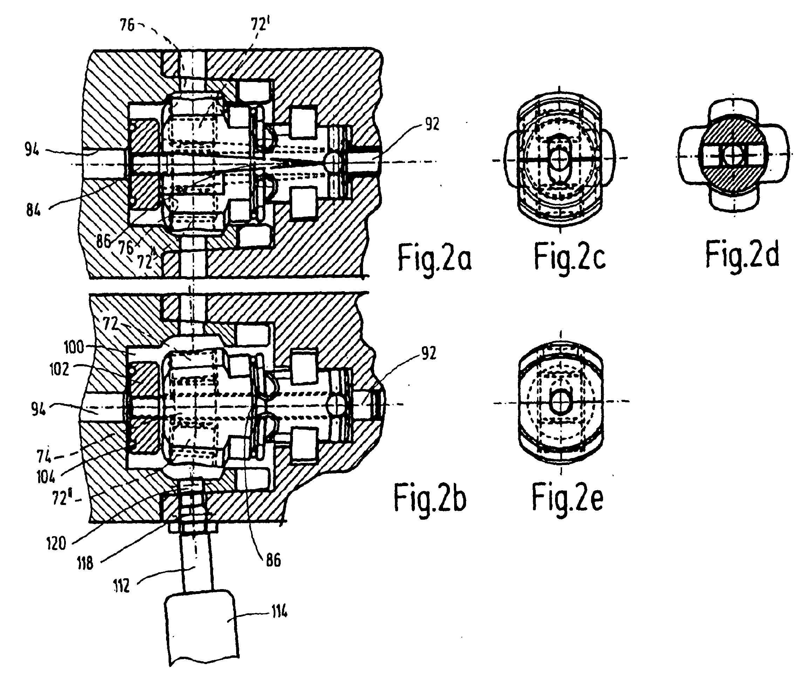

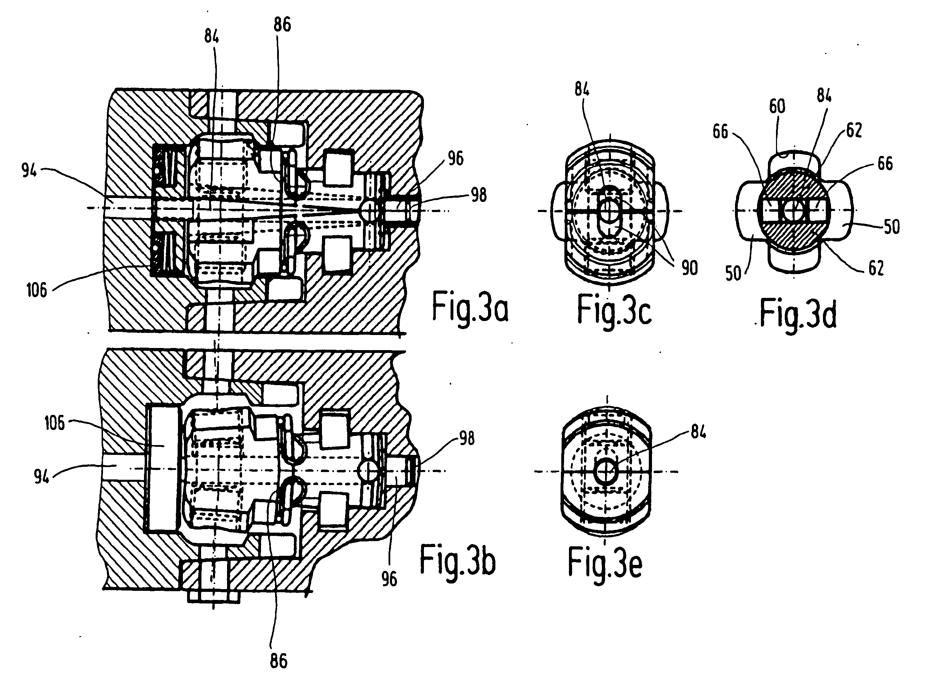

Zur Aufnahme des zentralen Rohrstücks 84 sind die Spannelemente 24 mit zentralen Längsnuten 90 im Bereich ihrer Schrägflächen 88 versehen, die einen axial durchgehenden Freiraum begrenzen. Da auch die Lagerrollen 66 beidseitig des Zentrums 39 im Abstand voneinander angeordnet sind, ist auch dort ein Durchgriff für das Rohrstück 84 möglich. Das gerade Rohrstück 84 verbindet die zentralen Funktionskanäle 92 und 94 im Aufnahmeteil 12 und im Werkzeugteil 16 miteinander. Die Funktionskanäle 92, 94 und das Rohrstück 84 sind üblicherweise als Kühlschmiermittelkanäle ausgebildet, die im vorliegenden Fall aufgrund der geradlinigen und stufenfreien Ausbildung für eine Minimalschmierung geeignet sind. Bei den in Fig. 2 und 3 gezeigten Ausführungsbeispielen weist das Rohrstück 84 auf der Seite des Aufnahmeteils 12 eine Flanschbüchse 96 mit einer Umfangsrille 98 für einen Dichtungsring auf. Die Flanschbüchse ist auf das betreffende Ende des Rohrstücks aufgeschraubt und taucht im montierten Zustand in eine entsprechende Ausnehmung 100 im Aufnahmeteil 12 ein. An seinem anderen Ende kann das Rohrstück 84 entweder unmittelbar in eine Ausnehmung 102 im Werkzeugteil 16 eingesteckt werden (Fig. 1a und 1b). Alternativ dazu kann auf das betreffende Rohrstückende eine Dichtscheibe 102 aufgeschraubt werden, die mit einer Dichtung 104 gegen eine Planfläche des Werkzeugteils 16 dichtend anliegt. Die Länge des Rohrstücks mit Dichtscheibe 102 kann durch Verstellen der Dichtscheibe 102 an dem Rohrstückgewinde an die Verbindungspartner angepasst werden.

Bei dem Ausführungsbeispiel nach Fig. 3a und 3b ist anstelle der einfachen Dichtscheibe 102 ein federndes Auswurfelement 106 mit Dichtscheibe 108 vorgesehen, das ein vorgespanntes und beim Einspannvorgang aufladbares Federpaket 110 enthält. Bei diesem Ausführungsbeispiel wird also das Werkzeugteil 16 beim Lösevorgang unter der Einwirkung des Auswurfelementes 106 aus seiner kraftschlüssigen Verbindung mit dem Aufnahmeteil 12 getrennt.

Im Falle der Figuren 1 und 2 ist dies nicht der Fall. Dort ist ein zusätzliches Hilfswerkzeug 112 vorgesehen, das zweckmäßig am Handgriff 114 eines für den Spannvorgang vorgesehenen Inbusschlüssels angeordnet ist. Das Hilfswerkzeug 112 bildet einen Bolzen, der zwei im Abstand voneinander angeordnete ballige Ringpartien 118, 120 aufweist und der in die im Wesentlichen miteinander fluchtenden Durchgriffsöffnungen 122, 124 im Aufnahmeteil 12 und im Werkzeugteil 16 eingreift. Fig. 1b zeigt den Zustand des Einführens des Hilfswerkzeugs und Fig. 2b den Zustand des Auswurfs durch Verkippen der Bolzen 112 in den beiden Durchgriffsöffnungen 122, 124.

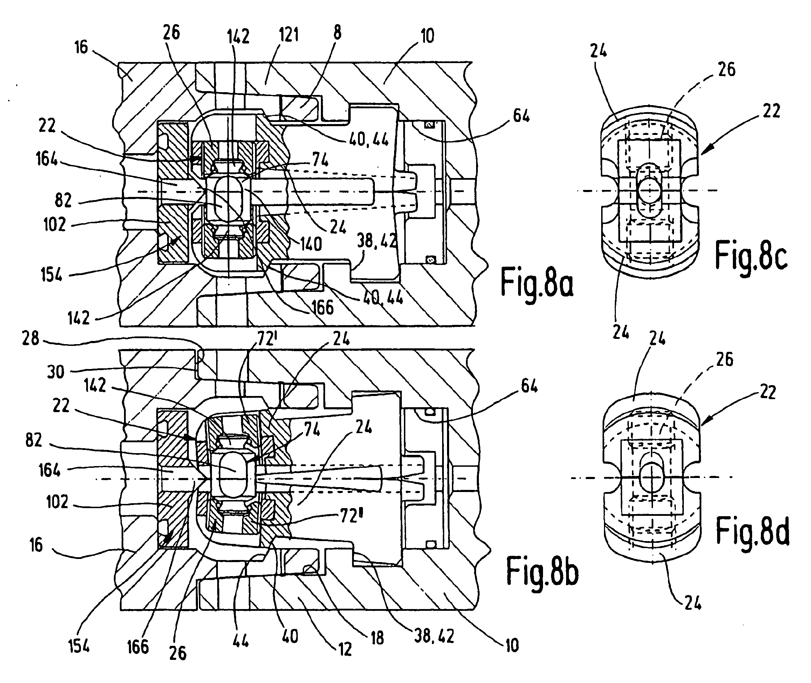

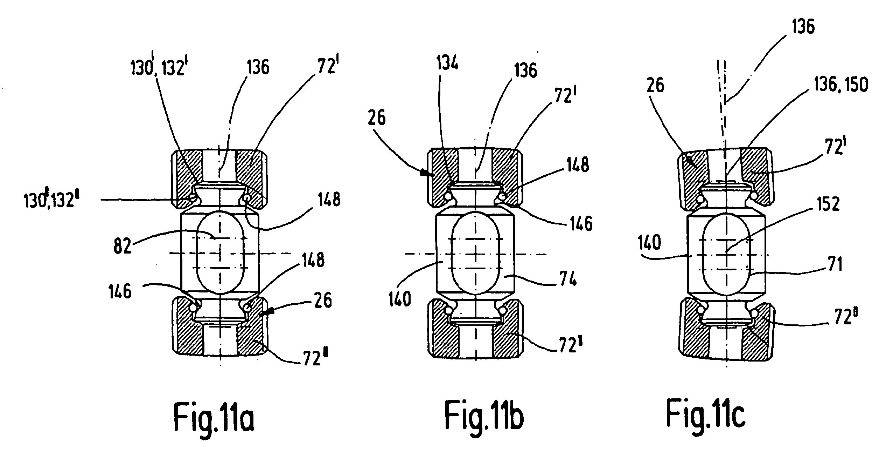

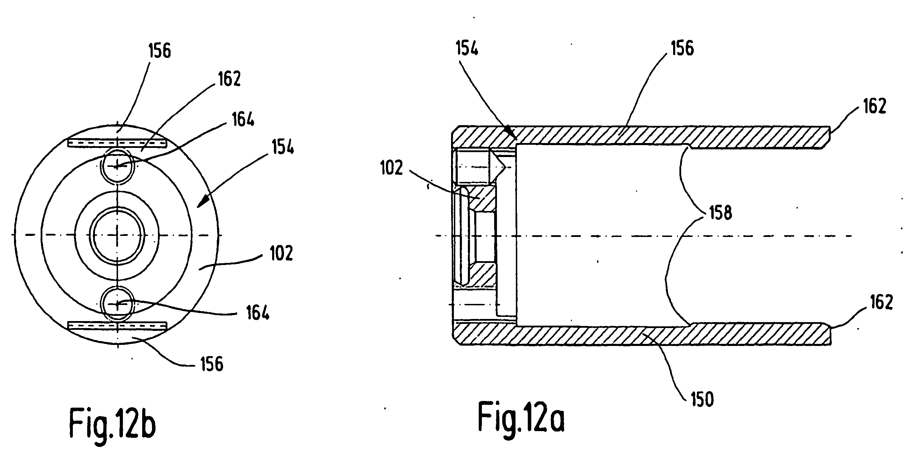

Das Ausführungsbeispiel nach den Fig. 8 bis 12 unterscheidet sich von den vorstehenden Ausführungsbeispielen vor allem dadurch, dass die Stützorgane 72',72" und das Zwischenglied 74 des Betätigungsmechanismus nicht lose gegeneinander anliegen, sondern einander paarweise zugeordnete, in Druckrichtung bzw. in Zugrichtung wirkende Kraftübertragungsflächen 130',132' bzw. 130",132" aufweisen. Wie aus einem Vergleich zwischen den Fig. 11a und 11b zu ersehen ist, ist zwischen den in Druckrichtung und den in Zugrichtung weisenden Kraftübertragungsflächen ein axiales Verschiebespiel 134 ausgebildet, das dafür sorgt, dass die Stützorgane 72',72" und das Zwischenglied 74 sich reibungsarm um die Verschiebeachse 136 verdrehen und um eine Querachse 138 (Fig. 11 c) begrenzt gegeneinander verschwenken können. Das Zwischenglied 74 weist zu diesem Zweck eine Mittelpartie 140 und zwei an den Enden der Mittelpartie 140 axial nach entgegengesetzten Seiten überstehende Kupplungszapfen 142 auf. Das Zwischenglied 74 greift mit seinen Kupplungzapfen 142 unter Bildung der einander zugewandten Kraftübertragungsflächen 130',132' bzw. 130",132" in je eine Kupplungsaufnahme 144 der benachbarten Stützorgane 72',72" ein. Die Kupplungszapfen 142 weisen eine als Ringnut ausgebildete Hinterschneidung 146 auf, in die ein die benachbarte Kupplungsaufnahme 144 begrenzender Sprengring 148 eingreift. Die dem Sprengring 148 zugewandte ringnutseitige ringförmige Kupplungszapfenflanke ist partiell kugelförmig gekrümmt, wobei der Mittelpunkt 150 der kugelförmigen Krümmung achszentral in der Nähe der Kupplungszapfen-Stirnfläche angeordnet ist. Andererseits ist die dem Boden der Kupplungsaufnahme 144 zugewandte Kupplungszapfen-Stirnfläche in ihrem ringförmigen Randbereich partiell kugelförmig konvex gekrümmt, wobei auch der Boden der Kupplungsaufnahme partiell kugelförmig konkav gekrümmt ist und der Mittelpunkt 152 der kugelförmigen Krümmung achszentral im Zentrum der Mittelpartie 140 des Zwischenglieds 74 angeordnet ist. Die Krümmungen sorgen dafür, dass die Zug- und Druckkräfte zwischen den Spannorganen 72',72" und dem Zwischenglied 74 großflächig und weitgehend querkraftfrei übertragen werden können.

Der Betätigungsmechanismus nach Fig. 11a bis c kann in Spannmechanismen 22 eingesetzt werden, deren Spannelemente 24 wie im Falle der gezeigten Ausführungsbeispiele im Zuge des Spannvorgangs gegeneinander um eine Lagerachse 66 verschwenkt oder radial mit Hilfe des Betätigungsmechanismus 26 gegeneinander verschoben werden.

Eine weitere Besonderheit der Ausführungsbeispiele nach Fig. 8 bis 12 besteht in der speziellen Ausgestaltung des Auswerfers 154, der eine das werkzeugseitige Ende der Spannelemente 24 übergreifende Dichtscheibe 102 und zwei an einander gegenüberliegenden Randpartien der Dichtscheibe 102 angeformte, die Spannelemente 24 an ihren Seitenflanken paarweise überlappende Stützlaschen 156 aufweist. Die elastisch aufbiegbaren Stützlaschen 156 sind mit Raststufen 158 an Schultern 160 der Spannelemente 24 einrastbar. Außerdem ist der Auswerfer 154 mit den Endkanten 162 seiner Stützlaschen 156 am Boden des spindelseitigen Aufnahmeteils 12 abstützbar. Die Stützlaschen 156 greifen dabei in die Bajonettöffnung 50 des Aufnahmeteils 12 ein und sichern die Spannelemente 24 in ihrer Montagestellung. Die Bügelfedern 46 sind hier deshalb ebenso wie die als Wurmfeder ausgebildete Rückstellfeder 86 entbehrlich.

Die Dichtscheibe 102 des Auswerfers 154 ist von zwei im Abstand voneinander angeordneten Gewindestiften 164 quer durchdrungen, die jeweils eine Konusspitze 166 aufweisen, gegen deren Konusfläche die Spannelemente 24 unter Axialverschiebung des Auswerfers 154 und Auswurf des Werkzeugsteils 16 aus dem Aufnahmeteil 12 auflaufen (vgl. Fig. 8b). Den Gewindestiften 164 kommt zusätzlich die Funktion einer Demontagehilfe für den an den Spannelementen 24 eingerasteten Auswerfer 154 zu. Zu diesem Zweck werden die Stifte gegen die Stirnflächen der Spannelemente gedreht, bis die Raststufen 158 der Stützlaschen 156 über die Schultern 160 ausgehoben sind.

Zusammenfassend ist folgendes festzuhalten: Die Erfindung bezieht sich auf eine Vorrichtung zum Verbinden eines einen Hohlschaft aufweisenden Werkzeugteils 16 mit einem eine Aufnahme für den Hohlschaft aufweisenden Aufnahmeteil 12. Die Vorrichtung umfasst zwei einander radial gegenüberliegende Spannelemente, die mit Spannschultern 38, 40 an Spannflächen 42, 44 des Werkzeugteils und der Aufnahme abstützbar sind. Weiter ist ein Betätigungsmechanismus 26 zur Verstellung der Spannelemente 24 zwischen einer Lösestellung und einer Spannstellung vorgesehen. Erfindungsgemäß weist der Betätigungsmechanismus zwei an den Spannelementen angeordnete Stützorgane 72', 72" und ein in den Stützorganen angeordnetes Zwischenglied 74 auf. Mindestens eines der Stützorgane 72' ist relativ zum zugehörigen Spannelement 24 verstellbar, während das Zwischenglied 74 beim Verstellvorgang gegenüber den Stützorganen verschwenkbar ist. Das Zwischenglied 74 weist einen als Langloch ausgebildeten Durchbruch 82 für den Durchgriff eines achszentral angeordneten Kühlmittelrohrs 84 auf.

## Patentansprüche

1. Vorrichtung zum Verbinden eines einen vorzugsweise kegelförmigen Hohlschaft (14) aufweisenden Werkzeugteils (16) mit einem eine Aufnahme (18) für den Hohlschaft (14) aufweisenden, vorzugsweise stirnseitig an einer Maschinenspindel (10) angeordneten Aufnahmeteil (12), mit zwei einander radial gegenüberliegenden, mit ihrem einen Ende in die Aufnahme (18) einsetzbaren und sich mit ihrem anderen Ende in das Innere des einzuspannenden Hohlschafts (14) erstreckenden Spannelementen, die mit Spannschultern (38,40) an im Inneren der Aufnahme und des Hohlschafts angeordneten Spannflächen (42,44) abstützbar sind, und mit einem Betätigungsmechanismus (26) zur Verstellung der Spannelemente (24) zwischen einer Lösestellung und einer Spannstellung, **dadurch gekennzeichnet, dass** der Betätigungsmechanismus zwei an den Spannelementen (24) angeordnete, in den Zwischenraum zwischen den Spannelementen weisende Stützorgane (72',72") und ein in Spannrichtung zwischen den Stützorganen angeordnetes und mit seinen beiden Enden gegen diese an jeweils einer Kontaktstelle anliegendes Zwischenglied (74) aufweist, wobei mindestens eines der Stützorgane (72') beim Verstellvorgang relativ zum zugehörigen Spannelement (24) unter Beibehaltung des Kontakts mit dem Zwischenglied (74) verschiebbar und gegenüber dem Zwischenglied (74) um eine zur Verschiebeachse (136) im Wesentlichen parallele Achse verdrehbar ist.

2. Vorrichtung nach Anspruch 1, **dadurch gekennzeichnet, dass** die Stützorgane (72',72") beim Verstellvorgang an den Kontaktstellen gegenüber dem Zwischenglied (74) quer zur Verschiebeachse (136) begrenzt verschwenkbar sind.

3. Vorrichtung nach Anspruch 1 oder 2, **dadurch gekennzeichnet, dass** mindestens eines der Stützorgane (72',72") als mit einem Außengewinde in ein Innengewinde des zugehörigen Spannelements eingreifendes Schraubelement ausgebildet ist.

4. Vorrichtung nach Anspruch 3, **dadurch gekennzeichnet, dass** beide Stützorgane (72',72") als Schraubelemente ausgebildet sind, wobei vorzugsweise eines der Schraubelemente (72") beim Verstellvorgang unbetätigt bleibt.

5. Vorrichtung nach einem der Ansprüche 1 bis 4, **dadurch gekennzeichnet, dass** das Zwischenglied (74) an seinen den Stützorganen (72', 72") zugewandten Kontaktflächen die Gestalt einer Kugelkalotte (78) aufweist und dass die dem Zwischenglied (74) zugewandten Kontaktflächen der Stützorgane (72', 72") als Kugelpfannen (80) ausgebildet sind.

6. Vorrichtung nach einem der Ansprüche 1 bis 5, **dadurch gekennzeichnet, dass** die Spannelemente (24) mit ihren Stützorganen (72', 72") federgestützt in Richtung Zwischenglied (74) vorgespannt sind.

7. Vorrichtung nach Anspruch 6, **gekennzeichnet durch** eine die Spannelemente (24) über- oder umgreifende Vorspannfeder (86).

8. Vorrichtung nach Anspruch 7, **dadurch gekennzeichnet, dass** die Vorspannfeder (86) als geschlossene vorgespannte Wurmfeder ausgebildet ist.

9. Vorrichtung nach Anspruch 8, **dadurch gekennzeichnet, dass** die Wurmfeder in sich zu einer unterbrochenen Ringnut ergänzende Einstiche (54) der Spannelemente (24) eingreift.

10. Vorrichtung nach einem der Ansprüche 1 bis 5, **dadurch gekennzeichnet, dass** die Stützorgane (72',72") und das Zwischenglied (74) einander paarweise zugeordnete, in Druck- bzw. Zugrichtung wirkende Kraftübertragungsflächen (130',132';130",132") aufweisen.

11. Vorrichtung nach Anspruch 10, **dadurch gekennzeichnet, dass** zwischen den in Druckrichtung und den in Zugrichtung weisenden Kraftübertragungsflächen (130',132';130",132") ein axiales Verschiebespiel (134) ausgebildet ist.

12. Vorrichtung nach Anspruch 10 oder 11, **dadurch gekennzeichnet, dass** das Zwischenglied (74) eine Mittelpartie (140) und zwei an den Enden der Mittelpartie axial nach entgegengesetzten Seiten überstehende Kupplungszapfen (142) aufweist.

13. Vorrichtung nach Anspruch 12, **dadurch gekennzeichnet, dass** das Zwischenglied (74) mit seinen Kupplungszapfen (142) unter Bildung der einander zugewandten Kraftübertragungsflächen in je eine Kupplungsaufnahme (144) der benachbarten Stützorgane (72',72") eingreift.

14. Vorrichtung nach Anspruch 12 oder 13, **dadurch gekennzeichnet, dass** die Kupplungszapfen (142) eine vorzugsweise als Ringnut (146) ausgebildete Hinterschneidung aufweisen, in die ein die benachbarte Kupplungsaufnahme (144) begrenzender Sprengring (148) eingreift.

15. Vorrichtung nach Anspruch 14, **dadurch gekennzeichnet, dass** die dem Sprengring (148) zugewandte ringnutseitige ringförmige Flanke des Kupplungszapfens (142) partiell kugelförmig gekrümmt ist.

16. Vorrichtung nach Anspruch 15, **dadurch gekennzeichnet, dass** der Mittelpunkt (150) der kugelförmigen Krümmung achszentral in der Nähe der Stirnfläche des Kupplungszapfens (142) angeordnet ist.

17. Vorrichtung nach einem der Ansprüche 14 bis 16, **dadurch gekennzeichnet, dass** die dem Boden der Kupplungsaufnahme (144) zugewandte Stirnfläche des Kupplungszapfens (142) in ihrem ringförmigen Randbereich partiell kugelförmig konvex gekrümmt ist.

18. Vorrichtung nach Anspruch 17, **dadurch gekennzeichnet, dass** der Boden der Kupplungsaufnahme (144) partiell kugelförmig konkav gekrümmt ist.

19. Vorrichtung nach Anspruch 17 oder 18, **dadurch gekennzeichnet, dass** der Mittelpunkt (152) der kugelförmigen Krümmung achszentral im Zentrum der Mittelpartie (140) des Zwischenglieds (74) angeordnet ist.

20. Vorrichtung nach einem der Ansprüche 1 bis 19, **dadurch gekennzeichnet, dass** das Zwischenglied (74) einen querverlaufenden Durchbruch (82) aufweist.

21. Vorrichtung nach Anspruch 20, **dadurch gekennzeichnet, dass** der Durchbruch (82) einen in Spannrichtung des Zwischenglieds langgestreckten Langloch-Umriss aufweist.

22. Vorrichtung nach einem der Ansprüche 1 bis 21, **dadurch gekennzeichnet, dass** die Spannelemente (24) mit je zwei in axialem Abstand voneinander angeordneten Spannschultern (38,40) an im Inneren der Aufnahme (18) des Hohlschafts (14) angeordneten, voneinander abgewandten Spannflächen (42,44) abstützbar sind.

23. Vorrichtung nach einem der Ansprüche 1 bis 22, **dadurch gekennzeichnet, dass** die Spannelemente (24) an ihren aufnahmeseitigen Enden oder im Abstand von diesen unmittelbar oder mittelbar über ein Lagerelement (66) gegeneinander anliegen und über den Betätigungsmechanismus (26) um eine durch die Anlagestelle gebildete Kippachse gegeneinander verschwenkbar sind.

24. Vorrichtung nach einem der Ansprüche 1 bis 23, **dadurch gekennzeichnet, dass** das Zwischenglied (74) beim Verstellvorgang an den Kontaktstellen gegenüber den Stützorganen (72',72") verschwenkbar ist.

25. Vorrichtung nach einem der Ansprüche 1 bis 24, **dadurch gekennzeichnet, dass** die Stützorgane (72',72") und das Zwischenglied (74) in der Spannstellung der Spannelemente (24) koaxial miteinander fluchten.

26. Vorrichtung nach einem der Ansprüche 1 bis 25, **dadurch gekennzeichnet, dass** die Stützorgane (72',72") und das Zwischenglied (74) in der Lösestellung der Spannelemente (24) einen in Richtung Werkzeugteil offenen stumpfen Winkel miteinander einschließen.

27. Vorrichtung nach einem der Ansprüche 1 bis 26, **dadurch gekennzeichnet, dass** das Zwischenglied (74) bei der Bewegung zwischen der Lösestellung und der Spannstellung stets achsparallel zur Spannrichtung ausgerichtet ist.

28. Vorrichtung nach einem der Ansprüche 1 bis 27, **dadurch gekennzeichnet, dass** die beiden Spannelemente (24) an ihren aufnahmeseitigen Enden je eine sich zu einem gemeinsamen Zentrierzapfen ergänzende Zapfenpartie (62) aufweisen, mit der sie in eine Zylinderausnehmung (64) des Aufnahmeteils (12) eingreifen.

29. Vorrichtung nach Anspruch 28, **dadurch gekennzeichnet, dass** die Lagerelemente (66) als Lagerrollen ausgebildet sind, die unter Freilassung eines zentralen Durchgriffs im Abstand voneinander im Bereich des Zentrierzapfens angeordnet sind.

30. Vorrichtung nach Anspruch 29, **dadurch gekennzeichnet, dass** die Zapfenpartien (62) an ihren Außenfläche teilkugelförmige Ringpartien (68) aufweisen, deren Mittelpunkt achszentral auf der Achse der Lagerrollen (66) liegt.

31. Vorrichtung nach einem der Ansprüche 22 bis 30, **dadurch gekennzeichnet, dass** die eine Spannschulter (38) der Spannelemente (24) an je einer in eine Bajonettausnehmung (60) des Aufnahmeteils (12) bajonettartig einführbaren und dort arretierbaren Schließzunge angeordnet ist.

32. Vorrichtung nach Anspruch 31, **dadurch gekennzeichnet, dass** die Schließzunge mit ihrer Spannschulter (38) federgestützt gegen die die Bajonettausnehmung (60) begrenzende aufnahmeseitige Spannfläche (42) anliegt.

33. Vorrichtung nach Anspruch 31 oder 32, **dadurch gekennzeichnet, dass** die aufnahmeteilseitige Spannschulter (38) der Spannelemente (24) mit einer teilkugelförmig gekrümmten Begrenzungsfläche gegen die aufnahmeteilseitige ebene Spannfläche (42) anliegt.

34. Vorrichtung nach Anspruch 33, **dadurch gekennzeichnet, dass** die Anlageflächen der aufnahmeteilseitigen Spannschulter (38) der Spannelemente (24) so gekrümmt sind, dass die Spannelemente (24) im Lösezustand unter Einwirkung einer Feder näher in Richtung Werkzeugteil (16) angeordnet sind als im Spannzustand.

35. Vorrichtung nach einem der Ansprüche 1 bis 34, **gekennzeichnet durch** zwei Bügelfedem (46), die je einen Bügelsteg (52) und zwei endseitige Federschlaufen (56) aufweisen, die mit ihrem Bügelsteg (52) in je einen Einstich (54) der Spannelemente (24) eingreifen und mit ihren Federschlaufen (56) an zwei einander gegenüberliegenden, vorzugsweise ebenen Oberflächenpartien der Spannelemente (24) so in einen Freiraum eingreifen, dass sie beim bajonettartigen Eindrehen der Spannelemente (24) in die Aufnahme (18) auf Randkanten (48) einer Einführausnehmung (50) auflaufen und in der jeweiligen Endstellung unter Ausübung einer die Spannelemente (24) in Richtung Werkzeugteil (16) verschiebenden Federkraft in einer vorgegebenen Drehlage mit diesen verrasten.

36. Vorrichtung nach Anspruch 35, **dadurch gekennzeichnet, dass** die Einstiche (54) zugleich die unterbrochene Umfangsnut zur Aufnahme der Wurmfeder (86) bilden.

37. Vorrichtung nach einem der Ansprüche 1 bis 36, **dadurch gekennzeichnet, dass** im Zwischenraum zwischen den Spannelementen (24) ein axial durchgehender Freiraum (90) gebildet ist.

38. Vorrichtung nach Anspruch 37, **dadurch gekennzeichnet, dass** der Freiraum von einem sich zwischen dem Aufnahmeteil (12) und dem Werkzeugteil (16) erstreckenden achszentralen Rohrstück (84) durchdrungen ist.

39. Vorrichtung nach Anspruch 38, **dadurch gekennzeichnet, dass** das achszentrale Rohrstück (84) achszentrale Funktionskanäle (92,94), insbesondere Kühlschmiermittelkanäle des Aufnahmeteils (12) und des Werkzeugteils (16) miteinander verbindet.

40. Vorrichtung nach Anspruch 38 oder 39, **dadurch gekennzeichnet, dass** das achszentrale Rohrstück (84) durch den im Zwischenglied (74) befindlichen Durchbruch (82) hindurchgreift.

41. Vorrichtung nach einem der Ansprüche 38 bis 40, **dadurch gekennzeichnet, dass** das achszentrale Rohrstück (84) durch den Freiraum zwischen den beiden Lagerrollen (66) hindurchgreift.

42. Vorrichtung nach einem der Ansprüche 38 bis 41, **dadurch gekennzeichnet, dass** das achszentrale Rohrstück an seinem einen Ende eine Flanschbüchse (26) trägt, mit der es in eine im Aufnahmeteil befindliche Ausnehmung (100) dichtend bis zum Anschlag des Flansches eingreift.

43. Vorrichtung nach einem der Ansprüche 38 bis 42, **dadurch gekennzeichnet, dass** das achszentrale Rohrstück (84) an seinem werkzeugteilseitigen Ende eine Dichtscheibe (102) trägt, mit der es gegen eine Dichtfläche (104) des Werkzeugteils (16) anliegt.

44. Vorrichtung nach Anspruch 43, **dadurch gekennzeichnet, dass** die Dichtscheibe (102) auf ein Gewinde des Rohrstücks (84) verstellbar aufgeschraubt ist.

45. Vorrichtung nach Anspruch 43 oder 44, **dadurch gekennzeichnet, dass** die Dichtscheibe (102) unter der Einwirkung einer Auswurffeder (110) in Richtung Werkzeugteil (16) vorgespannt ist.

46. Vorrichtung nach Anspruch 45, **dadurch gekennzeichnet, dass** die als Federpaket (110) ausgebildete Ausstoßfeder in einem am Rohrstück (84) angeordneten Käfig so angeordnet ist, dass sie beim Einspannen eine beim Lösevorgang freiwerdende Vorspannung in Ausstoßrichtung des Werkzeugteils (16) aufbaut.

47. Vorrichtung nach einem der Ansprüche 1 bis 46, **gekennzeichnet durch** einen Auswerfer (154), der eine das werkzeugseitige Ende der Spannelemente (24) übergreifende Dichtscheibe (102) und zwei an einander gegenüberliegenden Randpartien der Dichtscheibe (102) angeformte, die Spannelemente (24) an ihren Seitenkanten paarweise überlappende Stützlaschen (156) aufweist, dass die Stützlaschen an Schultern (160) der Spannelemente (24) einrastbar sind und dass mindestens ein **durch** die Dichtscheibe (102) mit einer Konusspitze (106) hindurchgreifender Stift (164) vorgesehen ist, gegen dessen Konusflächen die Spannelemente (24) beim Ausspannen unter Auswurf des Werkzeugteils (16) aus der Aufnahme (18) auflaufen.

48. Vorrichtung nach Anspruch 47, **dadurch gekennzeichnet, dass** der Auswerfer (154) mit den Endkanten (162) seiner Stützlaschen (156) im spindelseitigen Aufnahmeteil (12) abstützbar ist.

49. Vorrichtung nach einem der Ansprüche 47 bis 48, **dadurch gekennzeichnet, dass** die Stützlaschen (156) in eine Bajonettöffnung (50) des Aufnahmeteils eingreifen und dabei die Spannelemente (24) in ihrer Montageposition sichern.

50. Vorrichtung nach einem der Ansprüche 47 bis 49, **dadurch gekennzeichnet, dass** die Stifte (164) als Gewindestifte ausgebildet sind.

51. Vorrichtung nach Anspruch 50, **dadurch gekennzeichnet, dass** die Gewindestifte (164) eine Demontagehilfe für den an den Spannelementen (24) eingerasteten Auswerfer (154) bilden.

## Claims

1. Device for connecting a tool part (16) having a preferably tapered hollow shank (14) to an accommodating part (12) having a receptacle (18) for the hollow shank (14) and preferably arranged at the end face on a machine spindle (10), comprising two clamping elements which are located radially opposite one another, can be inserted with their one end into the receptacle (18), extend with their other end into the interior of the hollow shank (14) to be clamped in place and can be supported with clamping shoulders (38, 40) on clamping surfaces (42, 44) arranged in the interior of the receptacle and of the hollow shank, and comprising an actuating mechanism (26) for adjusting the clamping elements (24) between a release position and a clamping position, **characterized in that** the actuating mechanism has two supporting members (72', 72") arranged on the clamping elements (24) and pointing into the space between the clamping elements and an intermediate member (74) arranged in the clamping direction between the supporting members and bearing with its two ends against said supporting members at a respective contact point, wherein at least one of the supporting members (72'), during the adjusting operation, can be displaced relative to the associated clamping element (24) while maintaining the contact with the intermediate member (74) and can be rotated relative to the intermediate member (74) about an axis which is substantially parallel to the displacement axis (136).

2. Device according to Claim 1, **characterized in that** the supporting members (72', 72"), during the adjusting operation, can be pivoted to a limited extent transversely to the displacement axis (136) at the contact points relative to the intermediate member (74).

3. Device according to Claim 1 or 2, **characterized in that** at least one of the supporting members (72', 72") is designed as a screwing element which engages by means of an external thread in an internal thread of the associated clamping element.

4. Device according to Claim 3, **characterized in that** both supporting members (72', 72") are designed as screwing elements, wherein preferably one of the screwing elements (72") remains unactuated during the adjusting operation.

5. Device according to one of Claims 1 to 4, **characterized in that** the intermediate member (74) has the form of a spherical cap (78) at its contact surfaces facing the supporting members (72', 72"), and **in that** the contact surfaces, facing the intermediate member (74), of the supporting members (72', 72") are designed as ball sockets (80).

6. Device according to one of Claims 1 to 5, **characterized in that** the clamping elements (24), with their supporting members (72', 72"), are preloaded in a spring-assisted manner in the direction of the intermediate member (74).

7. Device according to Claim 6, **characterized by** a preloading spring (86) which overlaps or encloses the clamping elements (24).

8. Device according to Claim 7, **characterized in that** the preloading spring (86) is designed as a closed preloaded garter spring.

9. Device according to Claim 8, **characterized in that** the garter spring engages in recesses (54) of the clamping elements (24), said recesses (54) complementing one another to form a discontinuous annular groove.

10. Device according to one of Claims 1 to 5, **characterized in that** the supporting members (72', 72") and the intermediate member (74) have force-transmitting surfaces (130', 132' ; 130'', 132") which are assigned to one another in pairs and act in a pushing or pulling direction.

11. Device according to Claim 10, **characterized in that** an axial displacement clearance (134) is formed between the force-transmitting surfaces (130', 132'; 130", 132") pointing in the pushing direction and in the pulling direction.

12. Device according to Claim 10 or 11, **characterized in that** the intermediate member (74) has a central part (140) and two coupling pins (142) which project axially towards opposite sides on the ends of the central part.

13. Device according to Claim 12, **characterized in that** the intermediate member (74), with its coupling pins (142), engages in a respective coupling receptacle (144) of the adjacent supporting members (72', 72") while forming the force-transmitting surfaces facing one another.

14. Device according to Claim 12 or 13, **characterized in that** the coupling pins (142) have an undercut which is preferably formed as an annular groove (146) and in which a snap ring (148) defining the adjacent coupling receptacle (144) engages.

15. Device according to claim 14, **characterized in that** the annular flank of the coupling pin (142) on the annular-groove side and facing the snap ring (148) is partially spherically curved.

16. Device according to Claim 15, **characterized in that** the centre point (150) of the spherical curvature is arranged axially centrally in the vicinity of the end face of the coupling pin (142).

17. Device according to one of Claims 14 to 16, **characterized in that** the end face, facing the bottom of the coupling receptacle (144), of the coupling pin (142) is partially spherically convexly curved in its annular marginal region.

18. Device according to Claim 17, **characterized in that** the bottom of the coupling receptacle (144) is partially spherically concavely curved.

19. Device according to Claim 17 or 18, **characterized in that** the centre point (152) of the spherical curvature is arranged axially centrally in the centre of the central part (140) of the intermediate member (74).

20. Device according to one of Claims 1 to 19, **characterized in that** the intermediate member (74) has a transversely running aperture (82).

21. Device according to Claim 20, **characterized in that** the aperture (82) has a slotted hole outline elongated in the clamping direction of the intermediate member.

22. Device according to one of claims 1 to 21, **characterized in that** the clamping elements (24) can each be supported with two axially spaced-apart clamping shoulders (38, 40) on clamping surfaces (42, 44) arranged in the interior of the receptacle (18) of the hollow shank (14) and facing away from one another.

23. Device according to one of claims 1 to 22, **characterized in that** the clamping elements (24), on their receptacle-side ends or at a distance therefrom, bear against one another directly or indirectly via a bearing element (66) and can be pivoted relative to one another via the actuating mechanism (26) about a tilting axis formed by the bearing point.

24. Device according to one of claims 1 to 23, **characterized in that** the intermediate member (74), during the adjusting operation, can be pivoted relative to the supporting members (72', 72") at the contact points.

25. Device according to one of claims 1 to 24, **characterized in that** the supporting members (72', 72") and the intermediate member (74) are coaxially in alignment with one another in the clamping position of the clamping elements (24).

26. Device according to one of claims 1 to 25, **characterized in that** the supporting members (72', 72") and the intermediate member (74) enclose an obtuse angle with one another in the release position of the clamping elements (24), said angle being open in the direction of the tool part.

27. Device according to one of claims 1 to 26, **characterized in that** the intermediate member (74) is always oriented axially parallel to the clamping direction during the movement between the release position and the clamping position.

28. Device according to one of claims 1 to 27, **characterized in that** the two clamping elements (24) each have on their receptacle-side ends a pin part (62) with which they engage in a cylindrical recess (64) of the accommodating part (12), said pin parts (62) complementing one another to form a common centring pin.

29. Device according to Claim 28, **characterized in that** the bearing elements (66) are designed as bearing rollers which are arranged at a distance from one another in the region of the centring pin, with a central passage being left clear.

30. Device according to Claim 29, **characterized in that** the pin parts (62) have on their outer surfaces partly spherical annular portions (68), the centre point of which lies axially centrally on the axis of the bearing rollers (66).

31. Device according to one of Claims 22 to 30, **characterized in that** the one clamping shoulder (38) of the clamping elements (24) is arranged on a respective closing tongue which can be inserted in a bayonet-like manner into a bayonet recess (60) of the accommodating part (12) and can be locked there.

32. Device according to Claim 31, **characterized in that** the closing tongue bears with its clamping shoulder (38) in a spring-assisted manner against the receptacle-side clamping surface (42) defining the bayonet recess (60).

33. Device according to Claim 31 or 32, **characterized in that** the clamping shoulder (38) of the clamping elements (24) which is on the accommodating-part side bears with a partly spherically curved boundary surface against the planar clamping surface (42) on the accommodating-part side.

34. Device according to Claim 33, **characterized in that** the bearing surfaces of the clamping shoulder (38) of the clamping elements (24) which is on the accommodating-part side are curved in such a way that the clamping elements (24) in the release state are arranged, under the effect of a spring, closer in the direction of the tool part (16) than in the clamping state.

35. Device according to one of claims 1 to 34, **characterized by** two bow springs (46) which each have a bow web (52) and two end spring loops (56), which bow springs (46) engage with their bow web (52) in a respective recess (54) of the clamping elements (24) and, with their spring loops (56), at two opposite, preferably planar surface portions of the clamping elements (24), engage in a clearance space in such a way that, when the clamping elements (24) are turned in a bayonet-like manner into the receptacle (18), said bow springs (46) run onto marginal edges (48) of an insertion recess (50) and, in the respective end position, latch with said marginal edges (48) in a predetermined rotary position while exerting a spring force which displaces the clamping elements (24) in the direction of the tool part (16).

36. Device according to Claim 35, **characterized in that** the recesses (54) at the same time form the discontinuous circumferential groove for accommodating the garter spring (86).

37. Device according to one of Claims 1 to 36, **characterized in that** an axially continuous free space (90) is formed in the space between the clamping elements (24).

38. Device according to Claim 37, **characterized in that** an axially central tubular piece (84) extending between the accommodating part (12) and the tool part (16) passes through the free space.

39. Device according to Claim 38, **characterized in that** the axially central tubular piece (84) connects together axially central functional passages (92, 94), in particular cooling lubricant passages of the accommodating part (12) and of the tool part (16).

40. Device according to Claim 36 or 39, **characterized in that** the axially central tubular piece (84) passes through the aperture (82) located in the intermediate member (74).

41. Device according to one of Claims 38 to 40, **characterized in that** the axially central tubular piece (84) passes through the free space between the two bearing rollers (66).

42. Device according to one of Claims 38 to 41, **characterized in that** the axially central tubular piece has at its one end a flanged bush (26), with which it engages in a recess (100) in the accommodating part in a sealing manner until the flange runs against a stop.

43. Device according to one of Claims 38 to 42, **characterized in that** the axially central tubular piece (84) carries on its tool part-side end a sealing disc (102), with which it bears against a sealing surface (104) of the tool part (16).

44. Device according to Claim 43, **characterized in that** the sealing disc (102) is screwed onto a thread of the tubular piece (84) in an adjustable manner.

45. Device according to Claim 43 or 44, **characterized in that** the sealing disc (102) is preloaded in the direction of the tool part (16) under the effect of an ejection spring (110).

46. Device according to Claim 45, **characterized in that** the ejection spring designed as a spring assembly (110) is arranged in a cage, arranged on the tubular piece (84), in such a way that it builds up preloading in the ejection direction of the tool part (16) during the clamping, said preloading being released during the release operation.

47. Device according to one of Claims 1 to 46, **characterized by** an ejector (154) which has a sealing disc (102) overlapping the tool-side end of the clamping elements (24) and two supporting straps (156) which are integrally formed on opposite marginal portions of the sealing disc (102) and overlap the clamping elements (24) in pairs at their side edges, in that the supporting straps can be latched in place on shoulders (160) of the clamping elements (24), and in that at least one pin (164) is provided which passes with a cone point (106) through the sealing disc (102) and against the cone surfaces of which the clamping elements (24) run during the unclamping, with the tool part (16) being ejected from the receptacle (18).

48. Device according to Claim 47, **characterized in that** the ejector (154) can be supported with the end edges (162) of its supporting straps (156) in the accommodating part (12) on the spindle side.

49. Device according to either of Claims 47 and 48, **characterized in that** the supporting straps (156) engage in a bayonet opening (50) of the accommodating part and in the process secure the clamping elements (24) in their fitted position.

50. Device according to one of Claims 47 to 49, **characterized in that** the pins (164) are designed as headless set screws.

51. Device according to Claim 50, **characterized in that** the headless set screws (164) form a dismantling aid for the ejector (154) latched in place on the clamping elements (24).

## Revendications

1. Dispositif de connexion d'une partie d'outil (16), présentant un arbre creux (14) de préférence conique, avec une partie de réception (12) présentant un logement (18) pour l'arbre creux (14) et disposée de préférence du côté frontal sur une broche de machine (10), avec deux éléments de serrage radialement opposés l'un à l'autre, insérables par leur première extrémité dans le logement (18) et s'étendant avec leur autre extrémité dans l'espace intérieur de l'arbre creux (14), qui peuvent s'appuyer avec des épaulements de serrage (38, 40) sur des faces de serrage (42, 44) disposées à l'intérieur du logement et de l'arbre creux, et avec un mécanisme d'actionnement (26) pour le réglage des éléments de serrage (24) entre une position desserrée et une position serrée, **caractérisé en ce que** le mécanisme d'actionnement présente deux organes d'appui (72', 72") disposés sur les éléments de serrage (24) et orientés vers l'espace intermédiaire entre les éléments de serrage et un organe intermédiaire (74) disposé entre les organes de serrage dans la direction de serrage et appliqué par ses deux extrémités contre ceux-ci respectivement en un point de contact, dans lequel au moins un des organes d'appui (72') est déplaçable lors de l'opération de réglage par rapport à l'élément de serrage correspondant (24) tout en conservant le contact avec l'organe intermédiaire (74) et peut tourner par rapport à l'organe intermédiaire (74) autour d'un axe essentiellement parallèle à l'axe de déplacement (136).

2. Dispositif selon la revendication 1, **caractérisé en ce que** les organes d'appui (72', 72") peuvent pivoter de façon limitée aux points de contact par rapport à l'organe intermédiaire (74), transversalement à l'axe de déplacement (136), lors de l'opération de réglage.

3. Dispositif selon la revendication 1 ou 2, **caractérisé en ce qu'**au moins un des organes d'appui (72', 72") se présente sous la forme d'un élément à visser s'engageant avec un filet extérieur dans un filet intérieur de l'élément de serrage correspondant.

4. Dispositif selon la revendication 3, **caractérisé en ce que** les deux organes d'appui (72', 72") se présentent sous la forme d'éléments à visser, dans lequel de préférence un des éléments à visser (72") reste inactivé lors de l'opération de réglage.

5. Dispositif selon l'une quelconque des revendications 1 à 4, **caractérisé en ce que** l'organe intermédiaire (74) présente sur ses faces de contact tournées vers les organes d'appui (72', 72") la configuration d'une calotte sphérique (78) et **en ce que** les faces de contact des organes d'appui (72', 72") tournées vers l'organe intermédiaire (74) se présentent sous la forme de cuvettes sphériques (80).

6. Dispositif selon l'une quelconque des revendications 1 à 5, **caractérisé en ce que** les éléments de serrage (24) avec leurs organes d'appui (72', 72") soutenus par des ressorts sont précontraints en direction de l'organe intermédiaire (74).

7. Dispositif selon la revendication 6, **caractérisé par** un ressort de précontrainte (86) recouvrant ou entourant les éléments de serrage (24).

8. Dispositif selon la revendication 7, **caractérisé en ce que** le ressort de précontrainte (86) se présente sous la forme d'un ressort hélicoïdal précontraint fermé.

9. Dispositif selon la revendication 8, **caractérisé en ce que** le ressort hélicoïdal s'engage dans des entailles (54) des éléments de serrage (24) se complétant en une gorge annulaire interrompue.

10. Dispositif selon l'une quelconque des revendications 1 à 5, **caractérisé en ce que** les organes d'appui (72', 72") et l'organe intermédiaire (74) présentent des faces de transmission de force (130', 132'; 130", 132") associées entre elles par paires et agissant dans la direction de compression ou de traction.

11. Dispositif selon la revendication 10, **caractérisé en ce qu'**un jeu de déplacement axial (134) est formé entre les faces de transmission de force (130', 132'; 130", 132") orientées dans la direction de compression et orientées dans la direction de compression.

12. Dispositif selon la revendication 10 ou 11, **caractérisé en ce que** l'organe intermédiaire (74) présente une partie centrale (140) et deux tourillons de couplage (142) saillants axialement vers des côtés opposés aux extrémités de la partie centrale.

13. Dispositif selon la revendication 12, **caractérisé en ce que** l'organe intermédiaire (74) s'engage, avec ses tourillons de couplage (142) respectivement dans un logement de couplage (144) des organes d'appui voisins (72', 72") en formant les faces de transmission de force tournées l'une vers l'autre.

14. Dispositif selon la revendication 12 ou 13, **caractérisé en ce que** les tourillons de couplage (142) présentent une contre-dépouille de préférence en forme de gorge annulaire (146), dans laquelle s'engage un circlips (148) limitant le logement de couplage voisin (144).

15. Dispositif selon la revendication 14, **caractérisé en ce que** le flanc annulaire, du côté de la gorge annulaire du tourillon de couplage (142), tourné vers le circlips (148), est partiellement incurvé en forme de sphère.

16. Dispositif selon la revendication 15, **caractérisé en ce que** le point central (150) de la courbure sphérique est disposé sur l'axe central à proximité de la face frontale du tourillon de couplage (142).

17. Dispositif selon l'une quelconque des revendications 14 à 16, **caractérisé en ce que** la face frontale du tourillon de couplage (142) tournée vers le fond du logement de couplage (144) présente une courbure convexe sphérique partielle dans sa région de bord annulaire.

18. Dispositif selon la revendication 17, **caractérisé en ce que** le fond du logement de couplage (144) présente une courbure concave sphérique partielle.

19. Dispositif selon la revendication 17 ou 18, **caractérisé en ce que** le point central (152) de la courbure sphérique est disposé sur l'axe central au centre de la partie centrale (140) de l'organe intermédiaire (74).

20. Dispositif selon l'une quelconque des revendications 1 à 19, **caractérisé en ce que** l'organe intermédiaire (74) présente un passage s'étendant transversalement (82).

21. Dispositif selon la revendication 20, **caractérisé en ce que** le passage (82) présente un contour de trou oblong allongé dans la direction de serrage de l'organe intermédiaire.

22. Dispositif selon l'une quelconque des revendications 1 à 21, **caractérisé en ce que** les éléments de serrage (24) peuvent être appuyés avec chaque fois deux épaulements de serrage (38, 40) disposés à distance axiale l'un de l'autre sur des faces de serrage (42, 44) situées à l'opposé l'une de l'autre et disposées à l'intérieur du logement (18) de l'arbre creux (14).

23. Dispositif selon l'une quelconque des revendications 1 à 22, **caractérisé en ce que** les éléments de serrage (24) sont appliqués l'un contre l'autre à leurs extrémités côté logement ou à distance de celles-ci directement ou indirectement au moyen d'un élément de palier (66) et peuvent pivoter l'un par rapport à l'autre au moyen du mécanisme d'actionnement (26) autour d'un axe de basculement formé par le point d'appui.

24. Dispositif selon l'une quelconque des revendications 1 à 23, **caractérisé en ce que** l'organe intermédiaire (74) peut pivoter par rapport aux organes d'appui (72', 72") sur les points de contact lors de l'opération de réglage.

25. Dispositif selon l'une quelconque des revendications 1 à 24, **caractérisé en ce que** les organes d'appui (72', 72") et l'organe intermédiaire (74) sont alignés coaxialement entre eux dans la position serrée des éléments de serrage (24).

26. Dispositif selon l'une quelconque des revendications 1 à 25, **caractérisé en ce que** les organes d'appui (72', 72") et l'organe intermédiaire (74) forment entre eux un angle obtus ouvert en direction de la partie d'outil dans la position desserrée des éléments de serrage (24).

27. Dispositif selon l'une quelconque des revendications 1 à 26, **caractérisé en ce que** l'organe intermédiaire (74) est toujours orienté parallèlement à la direction de serrage lors du mouvement entre la position desserrée et la position serrée.

28. Dispositif selon l'une quelconque des revendications 1 à 27, **caractérisé en ce que** les deux éléments de serrage (24) présentent respectivement, à leurs extrémités côté logement, une partie de tourillon (62) se complétant en un tourillon de centrage commun, avec laquelle ils s'engagent dans un logement cylindrique (64) de la partie de réception (12).

29. Dispositif selon la revendication 28, **caractérisé en ce que** les éléments de palier (66) se présentent sous la forme de rouleaux de palier, qui sont disposés à distance l'un de l'autre dans la région du tourillon de centrage en laissant libre un passage central.

30. Dispositif selon la revendication 29, **caractérisé en ce que** les parties de tourillon (62) présentent sur leurs faces extérieures des parties annulaires partiellement sphériques (68), dont le point central est situé de façon axialement centrale sur l'axe des rouleaux de palier (66).

31. Dispositif selon l'une quelconque des revendications 22 à 30, **caractérisé en ce qu'**un premier épaulement de serrage (38) des éléments de serrage (24) est disposé respectivement sur une lamelle de fermeture pouvant être introduite à la manière d'une baïonnette dans un logement de baïonnette (60) de la partie de réception (12) et pouvant y être bloquée.

32. Dispositif selon la revendication 31, **caractérisé en ce que** la lamelle de fermeture est appliquée par son épaulement de serrage (38) avec l'appui d'un ressort contre la face de serrage côté logement (42) limitant le logement de baïonnette (60).

33. Dispositif selon la revendication 31 ou 32, **caractérisé en ce que** l'épaulement de serrage côté partie de réception (38) des éléments de serrage (24) est appliquée avec sa face de limitation courbe partiellement sphérique contre la face de serrage plane côté partie de réception (42).

34. Dispositif selon la revendication 33, **caractérisé en ce que** les faces d'appui de l'épaulement de serrage côté partie de réception (38) des éléments de serrage (24) sont incurvées de telle manière que les éléments de serrage (24) soient disposés à l'état desserré, sous l'action d'un ressort, plus près dans la direction de la partie d'outil (16) qu'à l'état serré.

35. Dispositif selon l'une quelconque des revendications 1 à 34, **caractérisé par** deux étriers élastiques (46), qui présentent chacun une âme d'étrier (52) et deux boucles élastiques terminales (56), qui s'engagent par leur âme d'étrier (52) respectivement dans une entaille (54) des éléments de serrage (24) et qui s'engagent par leurs boucles élastiques (56) sur deux parties de surface de préférence planes opposées l'une à l'autre des éléments de serrage (24) dans un espace libre de telle manière que, lors de la rotation à la manière d'une baïonnette des éléments de serrage (24) dans le logement (18), ils montent sur des arêtes de bord (48) d'un évidement d'introduction (50) et que, dans la position finale respective, ils soient encliquetés avec ceux-ci dans une position angulaire prédéterminée, en exerçant une force de ressort déplaçant les éléments de serrage (24) en direction de la partie d'outil (16).

36. Dispositif selon la revendication 35, **caractérisé en ce que** les entailles (54) forment également la gorge périphérique interrompue destinée à recevoir le ressort hélicoïdal (86).

37. Dispositif selon l'une quelconque des revendications 1 à 36, **caractérisé en ce qu'**un espace libre (90) axialement continu est formé dans l'espace intermédiaire entre les éléments de serrage (24).

38. Dispositif selon la revendication 37, **caractérisé en ce que** l'espace libre est traversé par une pièce tubulaire axialement centrale (84) s'étendant entre la partie de réception (12) et la partie d'outil (16).

39. Dispositif selon la revendication 38, **caractérisé en ce que** la pièce tubulaire axialement centrale (84) relie les uns aux autres des canaux fonctionnels axialement centraux (92, 94), en particulier des canaux de lubrifiant de refroidissement de la partie de réception (12) et de la partie d'outil (16).

40. Dispositif selon la revendication 38 ou 39, **caractérisé en ce que** la pièce tubulaire axialement centrale (84) passe à travers le passage (82) formé dans l'organe intermédiaire (74).

41. Dispositif selon l'une quelconque des revendications 38 à 40, **caractérisé en ce que** la pièce tubulaire axialement centrale (84) passe à travers l'espace libre entre les deux rouleaux de palier (66).

42. Dispositif selon l'une quelconque des revendications 38 à 41, **caractérisé en ce que** la pièce tubulaire axialement centrale porte à sa première extrémité une douille à bride (26), avec laquelle elle s'engage dans un évidement (100) situé dans la partie de réception, de façon étanche jusqu'à butée de la bride.

43. Dispositif selon l'une quelconque des revendications 38 à 42, **caractérisé en ce que** la pièce tubulaire axialement centrale (84) porte à son extrémité côté partie d'outil un disque d'étanchéité (102), avec lequel elle est appliquée contre une face d'étanchéité (104) de la partie d'outil (16).

44. Dispositif selon la revendication 43, **caractérisé en ce que** le disque d'étanchéité (102) est vissé de façon réglable sur un filet de la pièce tubulaire (84).

45. Dispositif selon la revendication 43 ou 44, **caractérisé en ce que** le disque d'étanchéité (102) est précontraint sous l'action d'un ressort d'éjection (110) en direction de la partie d'outil (16).

46. Dispositif selon la revendication 45, **caractérisé en ce que** le ressort d'expulsion se présentant sous la forme d'un paquet de ressorts (110) est disposé dans une cage disposée sur la pièce tubulaire (84) de telle manière que, lors du serrage, il crée une précontrainte dans la direction d'expulsion de la partie d'outil (16), qui se libère lors de l'opération de desserrage.

47. Dispositif selon l'une quelconque des revendications 1 à 46, **caractérisé par** un ressort d'éjection (154), qui présente un disque d'étanchéité (102) recouvrant l'extrémité côté outil des éléments de serrage (24) et deux pattes d'appui (156) formées sur des parties de bord opposées l'une à l'autre du disque d'étanchéité (102) et recouvrant par paires les éléments de serrage (24) sur leurs arêtes latérales, en ce que les pattes d'appui peuvent être encliquetées sur des épaulements (160) des éléments de serrage (24) et en ce qu'il est prévu au moins une tige (164) passant à travers le disque d'étanchéité (102) avec une pointe conique (106), dont les faces coniques écartent les éléments de serrage (24) lors du desserrage avec éjection de la partie d'outil (16) hors du logement (18).

48. Dispositif selon la revendication 47, **caractérisé en ce que** l'éjecteur (154) peut être appuyé avec les arêtes d'extrémité (162) de ses pattes d'appui (156) dans la partie de réception côté broche (12).

49. Dispositif selon l'une quelconque des revendications 47 à 48, **caractérisé en ce que** les pattes d'appui (156) s'engagent dans une ouverture à baïonnette (50) de la partie de réception et bloquent ainsi les éléments de serrage (24) dans leur position de montage.

50. Dispositif selon l'une quelconque des revendications 47 à 49, **caractérisé en ce que** les tiges (164) se présentent sous la forme de tiges filetées.

51. Dispositif selon la revendication 50, **caractérisé en ce que** les tiges filetées (164) forment une aide de démontage pour l'éjecteur (154) encliqueté avec les éléments de serrage (24).
